# EUROPEAN PATENT SPECIFICATION

(11) **EP 3 616 855 B1**
(45) Date of publication and mention of the grant of the patent: **13.10.2021**
(21) Application number: 18192095.0
(22) Date of filing: 31.08.2018
(51) Int. Cl.: B25J 9/10, F16H 19/00, B25J 13/08

(54) **ACTUATOR ASSEMBLY AND METHOD FOR ROTARY ACTUATION AROUND A PIVOT AXIS AS WELL AS USE OF THE ACTUATOR ASSEMBLY**
AKTUATORANORDNUNG UND VERFAHREN ZUR DREHBETÄTIGUNG UM EINE SCHWENKACHSE SOWIE VERWENDUNG DER AKTUATORANORDNUNG
ENSEMBLE ACTIONNEUR ET PROCÉDÉ D'ACTIONNEMENT ROTATIF AUTOUR D'UN AXE DE PIVOTEMENT ET UTILISATION DE L'ENSEMBLE ACTIONNEUR

(43) Date of publication of application: 04.03.2020
(73) Proprietor: Space Applications Services NV/SA, 1932 Sint-Stevens-Woluwe (BE)
(72) Inventor: Siedel, Dr.-Ing. Michael Torsten, 53902 Bad Münstereifel (DE)
(74) Representative: Jostarndt Patentanwalts-AG

(56) References cited:
- WO-A1-2014/009192
- US-A1- 2011 155 517
- US-A1- 2011 232 399
- US-A1- 2011 290 049

## Description

### TECHNCAL FIELD

The present invention relates to an actuator assembly for rotary actuation around a pivot axis, especially for pivoting angles less than 360°. Further, the present invention relates to a method for exerting rotary actuation around a pivot axis, especially for pivoting angles in the range of greater 0° and less than 360°. In particular, the present invention relates to a device and to a method according to the preamble of the respective independent claim.

### BACKGROUND

Modern robotic systems often require specialized actuators which need to fulfill a variety of requirements, for example: slim and light weight design, low friction and low backlash, and at the same time also high-power density (high power / mass ratio) and/or high torque capacity. Also, often, a variety of integrated sensors for adequate actuator control are required. In case integrated harnessing between joints and links is desired, as an additional requirement, actuators with a hollow shaft are desirable (especially for cables or wires to be guided through). Also, due to the fact that robotic systems often require several actuators in one single device, cost efficient drive solutions are preferred or required.

US 2011/290049 A1 discloses an actuator assembly configured for rotary actuation around a pivot axis, especially for pivoting angles greater than 0° and less than 360°, comprising a motor with a rotary drive; a drive train with a capstan drive comprising a drive pulley and a main pulley and transmission means for interconnecting the pulleys, wherein the main pulley is pivotable around the pivot axis, wherein the drive train couples the motor to the pivot axis via the drive pulley and the transmission means and the transmission means are provided by at least one cable, preferably a plurality of cables, each cable transmitting the drive pulley's pivoting motion to the main pulley by tensile forces applied to the lateral area of the main pulley.

In order to tackle a large set of technical constraints, usually, costly high-performance gears are used, for example planetary gears or so called "harmonic drive gears". But, only the latter may be used for hollow shaft applications. In order to face precise torque control, as an additional requirement, reliable torque sensors with good durability are required. For detecting the output torque, usually, two alternative techniques may be used: strain gauge sensors; or an elastic element is integrated into the drive train, wherein the position before and after this element is measured, in order to detect its displacement, wherein the acting torque can be calculated especially based on its spring rate and its displacement, and wherein the acting torque parameter may be used to control the actuator. But, both solutions have significant drawbacks: Strain gauge-based torque sensors usually require highly expensive parts, resulting in a price range of around 1.000 EUR or even more. One of the main drawbacks of the use of elastic elements is that it inherently leads to increased elasticity within the drive train, which in most circumstances negatively effects the actuator's controllability. Beside this, both solutions disadvantageously add significant mass and volume to the drive train. Therefore, there is a need for improved actuator design, both in view of technical and financial aspects.

In contrast to many applications for e.g. cars, crawler vehicles, helicopters or any further devices which require continuous turning movements (rotation), in many other applications, actuators do not necessarily need to be able to perform multiple turns, e.g. in robotic kinematics. For example, the range of motion of a kinematic chain of a robotic arm typically requires less than 360 degrees of rotational motion in its single joint or at least in the respective pivot-mounted joints. This aspect may be interpreted as an advantage (less constraints) when designing performant actuators especially for robotic purposes, and also in order to tackle various requirements at the same time.

### SUMMARY

It is an object to provide a method and device for improved actuation of rotary motion, in particular for pivoting angles less than 360 degrees. The object may also be defined as providing improved method and device for rotary actuation and actuation control based on robust and cost effective actuator design for accurate actuation, especially in the field of robotic kinematics.

This object is solved by a device according to the independent device claim. This object is also solved by a method according to the independent method claim. Advantageous embodiments are respectively described in dependent claims also.

In particular, the actuator assembly is configured for rotary actuation around a pivot axis (analogously: axle; resp. output shaft), especially for pivoting angles greater than 0° and less than 360°, wherein the actuator assembly comprises: a motor with a rotary drive; a drive train with a capstan drive comprising a drive pulley and a main pulley and transmission means for interconnecting the pulleys, wherein the main pulley is pivotable around the pivot axis, wherein the drive train couples the motor to the pivot axis via the drive pulley and the transmission means; an absolute torque sensor device configured for detecting the torque in the pivot axis.

According to the invention, the transmission means are provided by at least one cable, preferably a plurality of cables, each cable transmitting the drive pulley's pivoting motion to the main pulley by tensile forces applied to the lateral area of the main pulley, and wherein the absolute torque sensor device exhibits at least one force sensor, especially at least one strain gauge load cell, which is coupled to the capstan drive, especially coupled to the drive pulley, such that the actuator assembly is configured for absolute torque measurement via (or based on) force measurement. This allows for accurate actuation in conjunction with improved control based on force feedback, for example for actuation of exoskeletons.

The actuator according to one embodiment of the invention, especially an actuator configured for robotic purposes, may also be described by the following description, wherein the actuator design may be optimized for reduced work ranges especially required in robotic joints, and wherein the embodiments described further below may ensure a large set of the requirements mentioned before, and wherein the embodiments described further below may also be realized at low costs.

In particular, the drive train may comprise at least one component of the following group: a motor such as a low-profile EC flat motor (brushless DC motor, respectively, electronically commutated motor, so called EC motor), a customized spur gear with at least two stages, a capstan drive (especially so called capstan reducer), an absolute torque sensor device, an absolute position sensor device.

Generally, a capstan may designate a winch with vertical axis. The capstan drive according to the present invention may include several components. In particular, the capstan drive use ropes, especially steel wire ropes (or cables), coupled in parallel, which may transfer high forces at a small diameter of the wire, and which also allow for a bending radius which is suitable for the required / desired pulley diameters, especially in order to ensure high transmission ratios between input and output shafts of the capstan drive (resp. capstan reducer). In particular, the bending radius is as small as possible (smallest possible bending radius). For example, the bending radius is in the range of 3 to 40mm, especially for cable diameters in the range of 0.3 to 2mm. The drive pulley may e.g. exhibit a diameter in the range of 6 to 80mm.

Also, a small diameter of such cables (or ropes) may reduce the height of the pulleys. Also, the steel wire ropes may significantly reduce the wear in the capstan drive, especially in comparison with cables made of synthetic polymers materials based on aliphatic or semi-aromatic polyamides (especially nylon) or aramid materials. The ropes resp. the cables may preferably be wire-woven. This also allows for a compact design.

Such a capstan drive may also ensure minimum backlash and minimal friction loss. A reduction ratio of the capstan drive (resp. capstan reducer) may be limited, especially when keeping low the dimensions of the drive train. It has been found that in combination with the spur gear, the reduction ratio of the whole drive train can be further increase, especially in order to reach a significant torque level of the output shaft. Further, it has been found that in an arrangement with capstan drive being the last step (component) of speed reduction, the capstan drive may quite effectively minimize the backlash of the spur gear.

It has been found that in the inventive actuator assembly, an integrated absolute direct torque sensor device may advantageously be based on strain gauge load cell technology, which is also cost effective. In particular, at least one load cell of the sensor device is arranged for and/or is configured for detecting radial forces of a (small) pulley in the capstan drive, especially in order to allow for calculations of the nominal output torque.

Generally, a pulley may designate a wheel on an axle (axis) or shaft for supporting the motion of a cable or belt. In the present context, a pulley may also designate a component in a drive train consisting a part of a transmission gear, each pulley being arranged in series with further pulleys or gears.

It has been found that low cost and standard load cell (especially strain gauge based) may be used for absolute torque measurement, especially in an arrangement on an arm overlapping the drive pulley in the width direction (x), the arm especially providing for a sensitive area for arranging a plurality strain gauge based force sensors. This may also facilitate the design of an individual actuator assembly which is adapted to specific applications. This may also provide for increases accuracy and reliability.

The invention may also be described by referring to at least one of the following features, especially at least two of them in combination with each other:
main pulley with hollow shaft, assembly with low friction and low backlash, integrated absolute torque sensor device, optionally integrated absolute position sensor device, assembly with low profile (flat design) and/or light weight, tensile transmission means provided by steel cables (especially wirewove) arranged in parallel and coupling two pulleys of the capstan drive.

In the following, advantageous aspects of the capstan drive are described in more detail.

According to one embodiment of the invention, the capstan drive is configured for providing a transmission ratio in the range of 1 to 30, more preferred 2 to 20 e.g. 10, especially a reducing transmission ratio, especially by means of the geometry and dimensions of a crank unit. This allows for favorable transmission ratios especially within little space..According to one embodiment, the capstan drive, especially the lateral area of the main pulley, exhibits a crank unit for arranging and supporting and guiding the transmission means. This further facilitates reliable and compact arrangement, especially in conjunction with further design options in view of transmission ratio and applicable torque range. The crank unit may e.g. exhibit the geometry of a semi-circular disc.

According to one embodiment, the transmission means are provided by a plurality of cables, especially steel wire ropes, arranged in parallel and wound around the drive pulley with at least one winding, preferably two or three windings, the cables especially being preloaded. This also facilitates scaling up and down of the whole arrangement. The cables may be arranged in a symmetric manner, with respect to both directions of rotation of the main pulley. Thereby, preload may be predefined by so called Euler Eytelwein formula.

According to one embodiment, the transmission means are provided by a plurality of cables, especially steel wire ropes, arranged in parallel and wound around the drive pulley with at least one winding, the cables being arranged in parallel one above the other along the axis of the drive pulley, and the cables being guided by at least one guiding contour and being arranged at least approximately along the complete height of the guiding contour, wherein the drive pulley completely overlaps the guiding contour in the height direction. This also provides a robust design.

According to one embodiment, the capstan drive is integrated in the drive train such that the capstan drive provides for the last gear speed within the drive train. This also allows for minimized backlash.

According to one embodiment, the diameter of the drive pulley is smaller by a factor in the range of 1 to 30 than the diameter of the main pulley. This also provides for constructional and structural advantages.

In the following, advantageous aspects of components of the drive train are described in more detail.

According to one embodiment of the invention, the drive train comprises gear means, especially with a spur gear, which are at least partially arranged on the axis of the drive pulley, the gear means coupling the motor and the drive pulley. This allows for optionally providing a higher transmission radio and/or for optionally adapting the range of actuation speed and/or actuation torques in a more flexible manner. This also allows for high gear ratios. Although a spur gear provides for several advantages, also other types of gear means may advantageously be implemented in the drive train, e.g. a toothed belt, a V-belt, and/or a chain drive.

According to one embodiment, the drive train comprises gear means with a spur gear with at least three gears. It has been found that three gears may ensure a good compromise with respect to available space, costs, robustness and design variance for a plurality of applications.

According to one embodiment, the drive train comprises gear means with a spur gear with at least two gears being arranged on a symmetric middle line passing the axis of the main pulley. This may also compensate internal forces and torques. In particular, it has been found that by a specific positioning of the spur gear components, negative effects to the torque sensor device may be avoided.

The drive train may be configured for providing a transmission ratio in the range of 10 to 300, more preferred 30 to 150 especially a reducing transmission ratio. This also allows for a high output torque level.

In the following, advantageous aspects of the absolute torque sensor device are described in more detail.

According to one embodiment of the invention, the absolute torque sensor device is configured for detecting absolute torque based on strain measurement, especially strain exerted by at least one of the pulleys of the capstan drive, especially strain generated by radial forces on a pulley of the capstan drive and transferred via an arm to a supporting sheet of the actuator assembly, especially strain within the drive pulley. According to one embodiment, the absolute torque sensor device comprises at least one force sensor with a strain gauge load cell arranged in a sensitive area on an arm of the torque sensor device. This also allows for accurate and reliable control, respectively.

According to one embodiment, the absolute torque sensor device is integrated in the drive train by coupling an arm equipped with at least one force sensor to the drive pulley, especially via an interconnecting bracket. This also may ensure a favorable (integrated) design of the actuator assembly. The arm may preferably extend from the motor to the drive pulley, especially in a direction at least approximately in parallel to the symmetric middle line of the actuator assembly (especially the line connecting the axis of the main pulley and the drive pulley). This also allows for a space-saving arrangement. The arm may preferably extend from the axis of the motor to the drive pulley, at least overlapping the drive pulley's axis. The arm may preferably extend from the motor nearly to a/the cable guiding contour of the main pulley.

The absolute torque sensor device may be integrated in the capstan drive train by coupling at least one force sensor to the axis of the drive pulley. The absolute torque sensor device may be integrated in the capstan drive train such that a direct measurement can be realized, especially via force detection of radial forces exerted on the drive pulley. In contrast to torque detection e.g. via measurement of current (indirect measurement e.g. at the motor), the inventive direct measurement may also minimize parasitic effects (friction, backlash), especially in combination with the capstan drive. According to one preferred arrangement, these forces may simply be multiplied by the distance (lever R) from the drive pulley to the main pulley. Torque calculation may be carried out by a logic unit of the actuator assembly, the logic unit being coupled to the torque sensor device, especially to each of a plurality of force sensors.

In the following, advantageous aspects of the absolute position sensor device are described in more detail.

According to one embodiment of the invention, the actuator assembly further comprises an absolute position sensor device configured for detecting the angular position of the pivot axis. This allows for further increasing the functionality of the actuator assembly, especially by integrating direct measurement techniques.

According to one embodiment, the absolute position sensor device is coupled to the lateral area of the main pulley (direct measurement), especially by means of at least one sensor cable, especially being arranged in the same eccentric position with respect to the main pulley as the drive pulley. This also provides for compact and slim design with integrated measurement functionality. According to one embodiment, the absolute position sensor device comprises a traction mechanism coupled to the main pulley, wherein the absolute position sensor device is arranged eccentrically with respect to the main pulley. Directly coupling the position sensor device to the lateral area also may provide for high accuracy.

In the following, advantageous aspects of the whole assembly are described in more detail.

According to one embodiment of the invention, the actuator assembly is housed by two sheets, the sheets providing a housing for accommodating at least one of the following components: motor, drive train with capstan drive, drive pulley, main pulley, transmission means, absolute torque sensor device, absolute position sensor device, gear means coupled to the drive train. This also allows for a design which may be integrated e.g. in robotic kinematics in a favorable manner.

According to one embodiment, the actuator assembly comprises a logic unit configured to control the actuator assembly's actuation based on force measurement within the drive train, especially forces exerted on or by the drive pulley. This also provides for direct measurement and control at a high safety standard.

According to one embodiment, at least the following actuator assembly's components are arranged next to each other in the same plane, the plane especially being defined by a sheet: motor, drive train with capstan drive and drive pulley and main pulley and transmission means, absolute torque sensor device, absolute position sensor device. This also provides for compact, flat design with low profile.

According to one embodiment, a/the absolute position sensor device of the actuator assembly is pivot-mounted around an axis which is parallel to the axis which provides for the measurement data for the absolute torque sensor device, especially around an axis with the same eccentricity as the drive pulley. This also allows for favorable integration of measurement and control functionality.

According to one embodiment of the invention, the actuator assembly further comprises an absolute position sensor device configured for detecting the angular position of the pivot axis, wherein a sensor pulley of the absolute position sensor device is arranged eccentrically with respect to the pivot axis and is coupled to the lateral area of the main pulley by means of at least one sensor cable. This also further facilitates direct measurement and reliable control.

ITEM The above mentioned object is also solved by an actuator assembly configured for rotary actuation around a pivot axis, especially for pivoting angles greater than 0° and less than 360°, wherein the actuator assembly comprises: a motor with a rotary drive; a drive train with a capstan drive comprising a drive pulley and a main pulley and transmission means for interconnecting the pulleys, wherein the main pulley is pivotable around the pivot axis, wherein the drive train couples the motor to the pivot axis via the drive pulley and the transmission means; an absolute torque sensor device configured for detecting the torque in the pivot axis, wherein the transmission means are provided by at least one cable, preferably a plurality of cables, each cable transmitting the drive pulley's pivoting motion to the main pulley by tensile forces applied to the lateral area of the main pulley, and wherein the absolute torque sensor device exhibits at least one force sensor which is coupled to the capstan drive, especially coupled to the drive pulley, such that the actuator assembly is configured for absolute torque measurement via force measurement, wherein the capstan drive, especially the lateral area of the main pulley, exhibits a crank unit for arranging and supporting and guiding the transmission means; wherein the transmission means are provided by a plurality of cables, especially steel wire ropes, arranged in parallel and wound around the drive pulley with at least one winding, preferably two or three windings; and wherein the capstan drive is integrated in the drive train such that the capstan drive provides for the last gear speed within the drive train; wherein the absolute torque sensor device is configured for detecting absolute torque based on strain measurement, especially strain generated by radial forces by or on the drive pulley and transferred via an arm to a supporting sheet of the actuator assembly. This provides for multiple advantages as mentioned above. This actuator assembly may also further comprise an absolute position sensor device configured for detecting the angular position of the pivot axis, especially as described above.

According to one embodiment of the invention, the actuator assembly is configured for providing and controlling a pivoting motion in the range of greater 0° and less than 360°. It has been found that for pivot angles in the range of greater 0° and less than 360° even based on a simple and cost effective design, the inventive arrangement provides for multiple advantages mentioned above. Nonetheless, the inventive actuator assembly is configured for pivoting motions in the range of greater 360°, especially when providing both pulleys 1, 2 without any protruding parts overlapping the pulley's lateral area.

The above mentioned object is also solved by a method for exerting rotary actuation around a pivot axis, especially for pivoting angles in the range of greater 0° and less than 360°especially by use of an actuator assembly as described above, wherein a rotary motion is provided by a motor and transferred by a drive train with a capstan drive to a drive pulley and further to a main pulley which is pivotable around the pivot axis, wherein the actuation is controlled based on the absolute torque exerted by the main pulley around the pivot axis, wherein transmission of the rotary motion is carried out by tensile forces applied to the lateral area of the main pulley by transmission means interconnecting the pulleys, the transmission means being provided by at least one cable, preferably a plurality of cables, wherein the absolute torque control is carried out based on measurement of forces, especially strain, exerted on or by the drive pulley, especially forces exerted on an arm extending from the motor to the drive pulley. This provides for advantages as mentioned above. In particular, this also allows for reliable actuation and torque control at a high safety standard.

According to one embodiment of the invention, transmission of the rotary motion is carried out by a plurality of cables, especially steel wire ropes, arranged in parallel and wound around the drive pulley with at least one winding, preferably two or three windings, the cables especially being preloaded. According to one embodiment, the transmission means are guided via a crank unit of the main pulley and are fixed to the lateral surface of the main pulley. This allows for advantages mentioned above, respectively.

According to one embodiment of the invention, the absolute torque control is carried out based on measurement of forces by means of at least one force sensor with a strain gauge load cell arranged in a sensitive area on an arm extending from the motor to the drive pulley. In particular, this allows for a robust and direct control.

According to one embodiment of the invention, the angular position of the main pulley is measured by means of an absolute position sensor device being coupled to the lateral area of the main pulley, especially by means of at least one sensor cable being wound around a sensor pulley and also being wound around the main pulley, especially with opposite direction of rotation. In other words: Position detection may be coupled directly to the pivot axis resp. directly to the actuated pivot motion. This may also further optimize integration of broad functionality, especially with minimized risk of any erroneous measurement.

According to one embodiment of the invention, the rotary actuation is transmitted via gear means arranged within the drive train, especially via a spur gear with at least two gears, the gear means preferably increasing a transmission ratio, especially a reduction ratio, between the motor and the main pulley. According to one embodiment, torque or forces transmitted via the actuator assembly are absorbed by two sheets providing a housing for the actuator assembly. This allows for advantages mentioned above, respectively.

The above mentioned object is also solved by use of an actuator assembly for actuating robotic kinematics for rotary actuation around a pivot axis for pivoting angles in the range of greater 0° and less than 360°, wherein a capstan drive including at least one cable coupling a drive pulley to a main pulley provides for a transmission ratio in a drive train of the actuator assembly from a motor to the pivot axis, and wherein an absolute torque measurement is carried out within the drive train by means of at least one force sensor coupled to the drive pulley, especially use of the actuator assembly in hollow shaft applications, especially use of an actuator assembly as described above in or for an exoskeleton, especially in a method as described above. This provides for advantages as mentioned above. In particular, use of the inventive acutator assembly in or for an exoskeleton may also facilitate simulation of motion.

### SHORT DESCRIPTION OF FIGURES

In the following, the invention is further illustrated by describing specific embodiments. In case some of the reference signs are only illustrated in one of the figures, the following description may also refer to any further figure containing same elements or components:
**Figure 1** illustrates in a perspective side view an actuator assembly according to one embodiment;
**Figure 2****,** **3** respectively illustrate in an exploded view the actuator assembly according to Fig. 1;
**Figure 4A**, **4B** respectively illustrate in a perspective side view components of a capstan drive of an actuator assembly according to one embodiment, especially of an actuator assembly according to Fig. 1;
**Figure 5** illustrates in an exploded view components of a capstan drive and components of a force/torque sensor device of an actuator assembly according to one embodiment, especially of an actuator assembly according to Fig. 1;
**Figure 6** illustrates in a top view an actuator assembly according to one embodiment, especially of an actuator assembly according to Fig. 1, further illustrating a lever as well as force directions;
**Figure 7** illustrates in a top view components of gear means of an actuator assembly according to one embodiment, especially of an actuator assembly according to Fig. 1, further illustrating advantageous relative positions of gear parts;
**Figure 8** illustrates in a top view the location of an absolute position sensor device of an actuator assembly according to one embodiment, especially of an actuator assembly according to Fig. 1, further illustrating a pulley and a cable of an angular sensor of the sensor device; and
**Figure 9A, 9B** respectively illustrate in a schematic top view on the capstan drive train and its integrated torque sensor of an actuator assembly according to one embodiment.

### DETAILED DESCRIPTION OF FIGURES

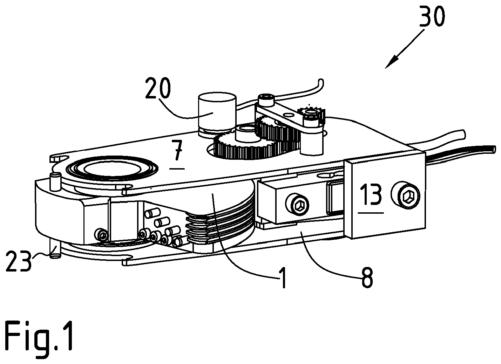

Fig. 1 illustrates the flat profile of an actuator assembly 30 in an assembled configuration.

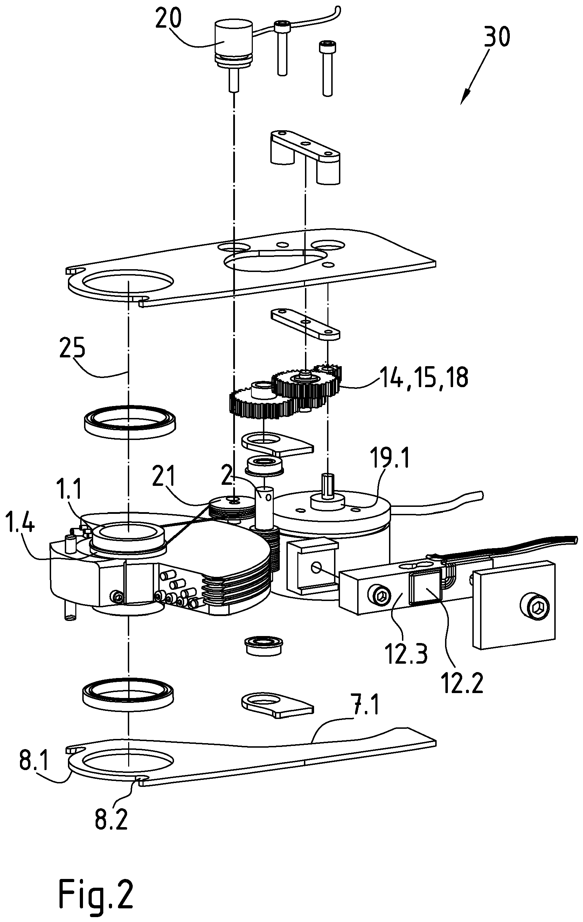

In Fig. 2, some components of the actuator assembly 30 are described in more detail, wherein the relative arrangement of gear means 14, 15, 18 with respect to a capstan drive 1, 2, 3 are illustrated. The main pulley 1 is arranged around a hollow shaft 1.1. Fig. 2 also illustrates a lateral area 1.4 of the main pulley.

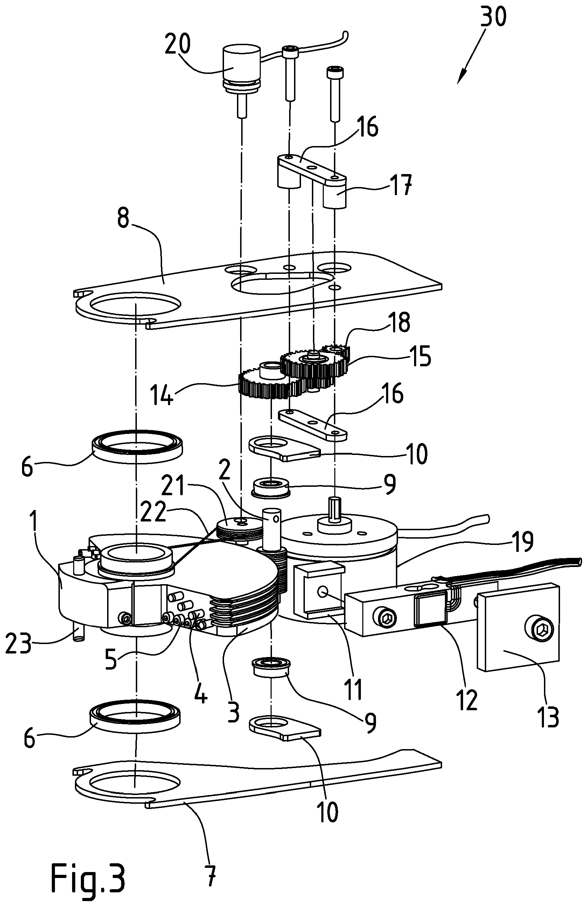

Fig. 3 provides an overview of the whole actuator assembly 30 including a capstan drive train 31.

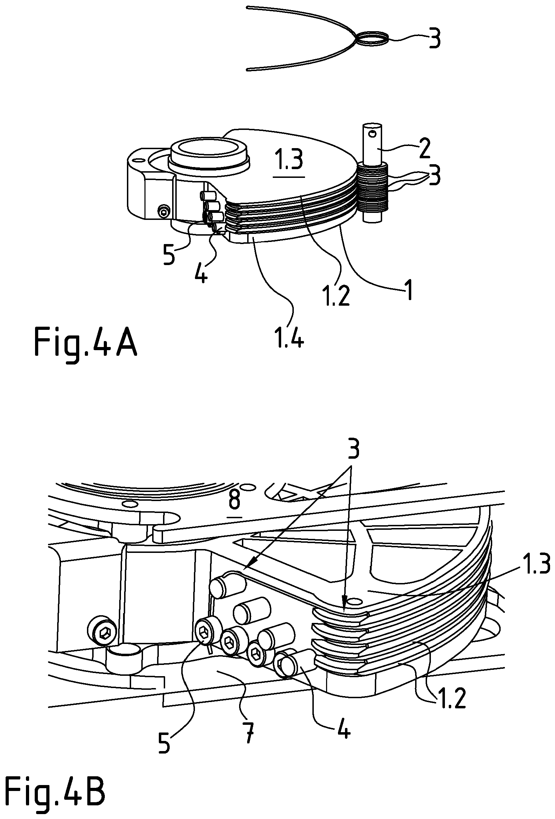

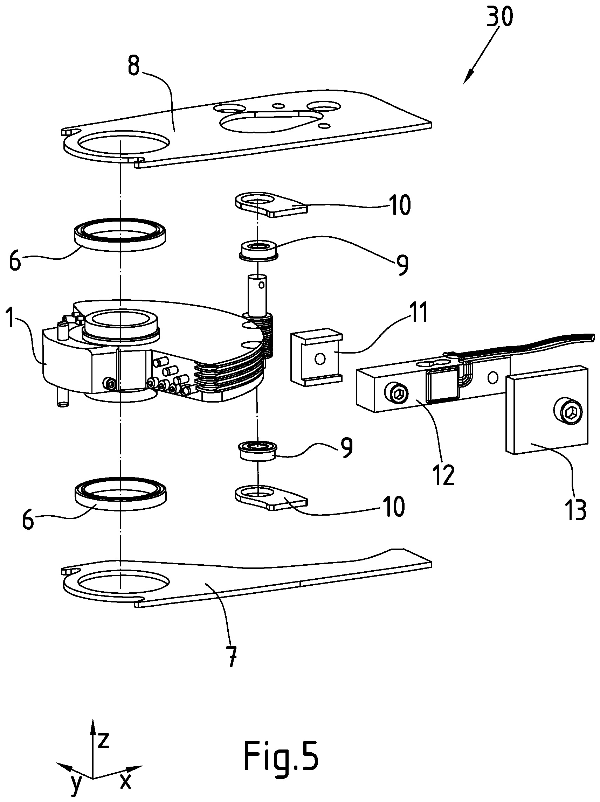

In Fig. 4A, 4B, main components of the capstan drive are illustrated. The capstan drive may be considered the central element of the actuator (Fig. 1, 2 and 3). It comprises a main pulley 1, a drive pulley 2 and a plurality of cables 3 (especially four cables) which interconnect both pulleys 1, 2; in Fig. 4A, at the top of the actuator, one cable is shown only in an exemplary manner. Each cable is to be wounded around the main pulley 1 and around the drive pulley 2, with inverted direction, same as any further cables in respective intended arrangement. The respective cable may be guided in grooves or recesses (not shown), on the main pulley 1 and/or on the drive pulley 2. It has been found that advantageously, preloading the cables 3 does not affect the bearing 6 (Fig. 5) of the main pulley 1 and does not affect the bearing 9 (Fig. 5) of the drive pulley 2 either. This allows for keeping friction low, and this also allows for high efficiency of this transmission technique. Thereby, drive pulley 2 preferably is supported in both plates/sheets 10 by form fit and by means of ball bearings. Sheets 10 are fixed at bracket 11, e.g. by at least one screw. The bracket 11 can be screwed on the shaft of the drive pulley 2 (Fig. 5).

It has been found that in order to connect both pulleys, minimum one cable 3 should be provided. In the embodiment illustrated in Fig. 4A, four cables are used (coupled) in parallel, in order to increase maximum force which may be transmitted between the pulleys 1, 2. But, even more cables may be used, in order to adapt the inventive arrangement to a specific range of transmittable forces. In other words: Use of a plurality of cables also facilitates scaling up or scaling down the actuator design.

As mentioned above, each cable 3 exhibits at least one winding around the drive pulley 2. In order to increase the traction between the drive pulley 2 and the cables 3, in the embodiment illustrated in Fig. 4A, three windings are applied. This also allows for minimizing any risk of slippage between the cables 3 and the drive pulley 2, especially when applying load to the drive train.

Each ending of each cable 3 is fixed on the main pulley 1, especially by bending around its related pin 4, and by finally clamping it between its related bold head 5 and the surface of the main pulley 1. Alternatively, the bold head 5 may include a screw joint. This manner of fixing the cables 3 is further illustrated in Fig. 4B.

As shown in Fig. 4A, the main pulley 1 exhibits a hollow shaft design, and the cables 3 are arranged on a dimensionally stable cable guiding contour 1.2 of a crank unit 1.3 exhibiting a geometry of a semi-circular disc. The axis of the main pulley 1 may also provide the axis of the joint to be driven; in such a coaxial or concentric arrangement, the cables may be guided through the axis. This also positively affects internal harnessing of e.g. robotic structures.

In Fig. 5, support of the capstan drive and of the torque sensor in the actuator's support structure 7, 8 is illustrated. The main structure of the actuator (Fig. 5) may be provided by a bottom sheet 7 and a top sheet 8. Both parts may be interconnected by a side braked 13. Two bearings 6 arranged below and above the main pulley 1 are guiding the rotation of the main pulley 1. The bearings 6 are connected to the main structural sheets 7, 8. Pin 23 runs in a round groove 8.1 (or along a round border) in both sheets 7, 8, each groove 8.1 providing two blocking end positions 8.2, wherein the pin 23 is in an arrangement fulfilling a function as an end stop, especially between two positions offset from each other by at least 0°. The angular length of the grooves may define the maximum work range of this joint. Thus, the two blocking end positions 8.2 provided by the sheets 7, 8 may prevent the main pulley 1 being pivoted further than its maximum angle of rotation.

To detect the output torque of the actuator, a strain gauge-based torque sensor device 12 including a force sensor 12.2 (especially resistive wire strain) is integrated into the actuator. As depicted in Fig. 5, the sensitive area 12.1 equipped with strain gauge sensors 12.2 is located in the middle (centrically) of the torque sensor 12. The right side (front side in Fig. 5) of the torque sensor device 12 is attached to the side bracket 13, especially by means of the threaded hole in arm 12.3, as shown in Fig. 5. The side bracket 13 is rigidly connected to sheets 7, 8, e.g. by means of adhesive bond and/or form fit, optionally also frictional connection (at least partially), e.g. by means of screws or rivets. Alternatively, parts 13 and 7 or 8 may also be provided as one single integral part. The left side (rear side in Fig. 5) of the torque sensor device 12 is connected to the drive pulley 2, especially by use of an interconnecting bracket 11 as well as by two interconnecting sheets 10 and two bearings 9. In such an arrangement, the drive pulley 2 may transfer radial forces to the main structure only via the force sensors 12.2 of the torque sensor device 12. In other words: The torque sensor device 12 is arranged intermediate on the path of the flux of forces between the drive pulley 2 and the bracket 13.

The absolute torque sensor device 12 comprises an arm 12.3 extending in the width direction x, the arm 12.3 providing for at least two opposite sensitive areas 12.1 for arranging the force sensors 12.2. Preferably, the sensitive areas 12.1 are arranged at an x-position slightly more eccentric than the drive pulley's x-position, with respect to the actuation axis 25 (pivot axis). In particular, eccentricity is about factor 1.1 to 1.5 of the drive pulley's eccentricity.

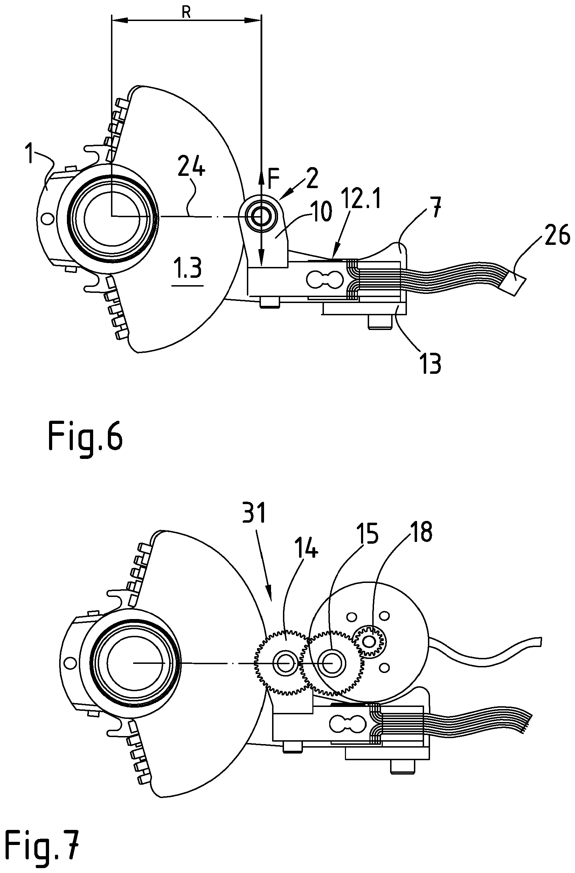

In Fig. 6, the functioning of the torque sensor is illustrated. According to the arrangement shown in Fig. 6, the torque sensor device 12 detects forces F in radial direction, at a distance R towards the main pulley 1. In particular, the output torque of the main pulley 1 can be calculated by multiplying the respective amount of force F and the distance (lever R) from the center of rotation (axis) of the drive pulley 2 to the center of rotation (axis) of the main pulley 1. The torque sensor device 12 is coupled to a logic unit 26.

Fig. 7 depicts a setup of gear means comprising a spur gear 14, 15, 18. In order to increase the transmission ratio (especially reduction ratio) of the capstan drive, a spur gear 14, 15, 18 is connected to the drive pulley 2. As shown in Fig. 7, the spur gear 14, 15, 18 exhibits two stages (three gears); however, alternatively, the spur gear 14 may also be designed with various different numbers of stages as well, e.g. three or four reduction stages.

The first gear 14 of the spur gear is mounted on top of the drive pulley 2. In order to support symmetric load effects to the force sensors, the second gear 15 preferably is located on the symmetric middle line 24 passing via the respective axis of main pulley 1 and drive pulley 2 (Fig. 7). The second gear 15 is connected to the top sheet 8 by two gear support brackets 16 and two spacer tubes 17 (Fig. 3). As the last one, the third gear 18 is mounted directly on the shaft of the electrical motor 19 (Fig. 3), i.e., on the shaft of the rotary drive 19.1 (Fig. 2). The motor 19 is, e.g., supported in top sheet 8. As illustrated in Fig. 2, bottom sheet 7 may exhibit a recess 7.1 for accommodating the motor, especially in view of minimal space required (compact actuator design).

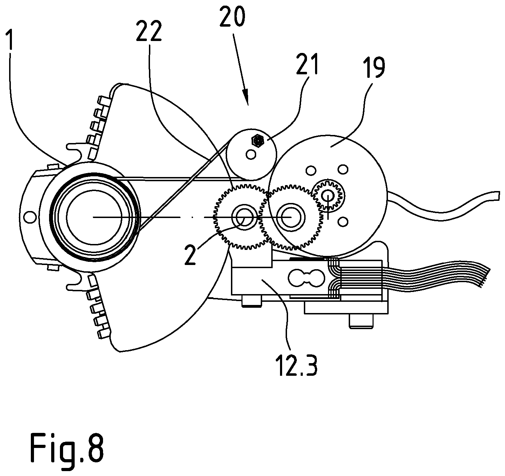

In Fig. 8, the relative arrangement of an angle sensor is illustrated. In the actuator design described above, an absolute position sensor device 20 may be integrated in easy manner, especially in order to measure the main pulley's 1 position (rotary position) and thereby also the (rotary) position of the actuator output shaft (Fig. 8). In case this shaft (main pulley 1) exhibits a hollow shaft design, preferably, a pulley 21 of the position sensor device 20 may be placed eccentrically on one side of the main pulley 1, especially on the side the drive pulley is arranged (right side in Fig. 8). The position sensor device 20, 21 is supported in top sheet 8. As an alternative, angular measurement may also be carried out based on detection at the drive pulley 2, deducting the angular movement of the main pulley 1 based on the transmission ratio. In other words: Alternatively, sensor pulley 21 may also be coupled to drive pulley 2.

In order to connect an axis of the position sensor device 20 with the main pulley 1, especially in an eccentric positions, a sensor pulley 21 (rope pulley) and a sensor cable 22 may be used. The sensor pulley 21 is coaxially mounted on the axis of the position sensor device 20. The sensor cable 22 is wound around the sensor pulley 21 (angular sensor) and also around the main pulley 1, namely in such a way that these two pulleys 1, 21 are rotating with opposite direction (X-guidance or 8-guidance). This allows for increasing the angle of winding on both pulleys 1, 21 (increased area of contact). Both cable endings are fixed (especially clamped) on the side of the main pulley 1. The sensor pulley 21 may e.g. exhibit a diameter in the range of 15 to 25mm. But, this range is given only as an example, since the present invention allows for scaling up or down in a considerable manner. Coupling the sensor pulley 21 to the main pulley 1 may also facilitate the evaluation of measurement data, especially since the main pulley 1 does not rotate as much as the drive pulley 2, or only much less (especially no multi turns).

By using a cable for connecting also the sensor axis with the main pulley 1, backlash in this connection may be minimized or even can be avoided. In addition, this design is lightweight and slim and also allows for a high degree of freedom to the designer, especially with respect to any position of the angular sensor 21 in arbitrary distance to the main pulley 1.

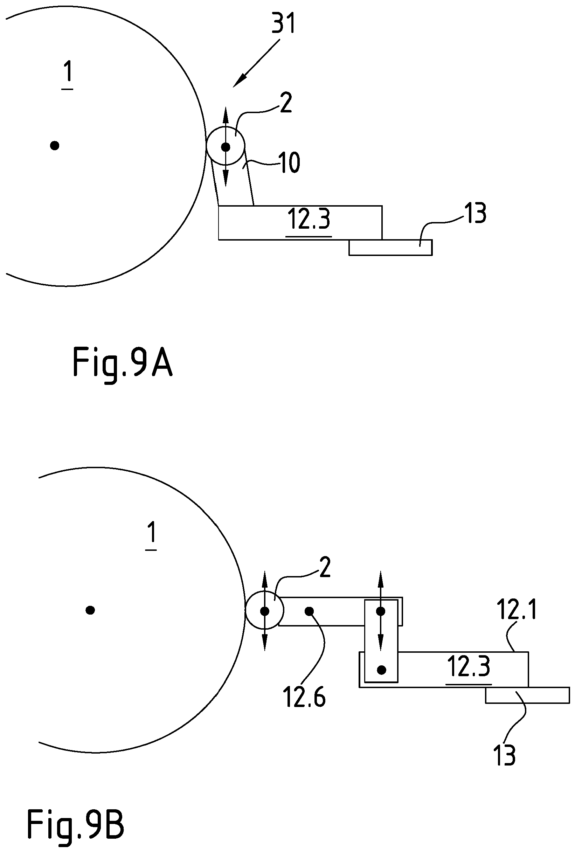

As an alternative to the manner of integration of the torque sensor 12 in the drive train, Fig. 9A, 9B illustrate the use of an additional arm 12.4 in conjunction with a kinematic interlink (especially additional lever arm for adjusting the range of forces) between the drive pulley 2 and the sensitive area 12.1. In Fig. 9A, use of a sheet 10 is illustrated schematically, in conformity with Fig. 5. As shown in Fig. 9B, mechanical connection between the drive pulley 2 and the arm 12.3 may also be provided by a kinematic intermediate interlink comprising an additional arm 12.4 and an interconnection 12.5, especially a connection rod, connecting arm 12.3 and additional arm 12.4. This kinematic interlink may provide for a pivotal point or velocity pole 12.6. The latter design (Fig. 9B) may also allow for increasing or attenuating the transferred forces, especially as a function of the lever ratios.

In summary, the present invention allows for a compact actuator design with optionally high transmission ratio, and with force control and pivoting movement detection (direct measurement). In particular, the following feature each may provide for advantageous effects of the invention:
actuator assembly configured for hollow shaft applications; low friction, especially due to adequate design of transmission means within the drive train; low backlash, especially due to direct coupling of transmission means for actuation or for motion detection; integrated low cost absolute torque sensor device; optionally integrated absolute position sensor device; low profile of the whole arrangement, especially due to symmetric housing with opposite flat surfaces or sheets; light weight, especially due to transmission means in the form of cables coupled in parallel, provided for the capstan drive; favorable design for facilitated scaling up and down.

### List of reference signs

- 1: main pulley
- 1.1: shaft, especially hollow shaft
- 1.2: cable guiding contour (dimensionally stable)
- 1.3: crank unit
- 1.4: lateral area of the main pulley
- 2: drive pulley
- 3: cable or rope or belt (transmission means for kinematics based on cable pull)
- 4: pin
- 5: bold head
- 6: bearing of main pulley
- 7: bottom sheet
- 7.1: recess
- 8: top sheet
- 8.1: groove
- 8.2: blocking end position
- 9: bearing of drive pulley
- 10: interconnecting sheet
- 11: interconnecting bracket
- 12: absolute torque sensor device, especially including at least one force sensor
- 12.1: sensitive area
- 12.2: force sensor(s), especially strain gauge sensor(s)
- 12.3: arm
- 12.4: additional arm
- 12.5: interconnection, especially connection rod
- 12.6: pivotal point or velocity pole
- 13: side bracket
- 14: gear means, especially first gear of a spur gear
- 15: gear means, especially second gear of the spur gear
- 16: support bracket
- 17: spacer tube
- 18: gear means, especially third gear of the spur gear
- 19: motor, especially low-profile EC flat motor
- 19.1: rotary drive
- 20: absolute position sensor device, especially including at least one angular sensor
- 21: sensor pulley for angular measurement (angular sensor); rope pulley; cable pulley
- 22: sensor cable or rope or belt (sensing means for detection via a traction mechanism)
- 23: pin
- 24: symmetric middle line
- 25: pivot axis
- 26: logic unit
- 30: actuator assembly
- 31: drive train
- F: force, detected force
- R: lever
- x: width direction (lengthwise)
- y: depth direction (crosswise)
- z: height direction

## Claims

1. Actuator assembly (30) configured for rotary actuation around a pivot axis, especially for pivoting angles greater than 0° and less than 360°, comprising:
a motor (19) with a rotary drive;
a drive train with a capstan drive comprising a drive pulley (2) and a main pulley (1) and transmission means (3) for interconnecting the pulleys, wherein the main pulley is pivotable around the pivot axis, wherein the drive train couples the motor to the pivot axis via the drive pulley and the transmission means;
an absolute torque sensor device (12) configured for detecting the torque in the pivot axis;
wherein the transmission means (3) are provided by at least one cable, preferably a plurality of cables, each cable transmitting the drive pulley's pivoting motion to the main pulley (1) by tensile forces applied to the lateral area (1.4) of the main pulley,
**characterized in that** the absolute torque sensor device (12) exhibits at least one force sensor (12.2), especially at least one strain gauge load cell, the force sensor being coupled to the capstan drive, especially coupled to the drive pulley, such that the actuator assembly is configured for absolute torque measurement via force measurement.

2. Actuator assembly according to claim 1, wherein the capstan drive, especially the lateral area of the main pulley (1), exhibits a crank unit (1.3) for arranging and supporting and guiding the transmission means (3); and/or wherein the transmission means (3) are provided by a plurality of cables, especially steel wire ropes, arranged in parallel and wound around the drive pulley (1) with at least one winding, preferably two or three windings, the cables especially being preloaded; and/or wherein the capstan drive is integrated in the drive train such that the capstan drive provides for the last gear speed within the drive train.

3. Actuator assembly according to any of the preceding claims, wherein the drive train comprises gear means (14), especially with a spur gear, which are at least partially arranged on the axis of the drive pulley (2), the gear means coupling the motor and the drive pulley; and/or wherein the drive train comprises gear means with a spur gear with at least three gears (14, 15, 18); and/or wherein the drive train comprises gear means with a spur gear with at least two gears (14, 15) being arranged on a symmetric middle line (24) passing the axis of the main pulley (1).

4. Actuator assembly according to any of the preceding claims, wherein the absolute torque sensor device (12) is configured for detecting absolute torque based on strain measurement, especially strain exerted by at least one of the pulleys (1, 2) of the capstan drive, especially strain generated by radial forces on a pulley of the capstan drive and transferred via an arm (12.3) to a supporting sheet (7, 8) of the actuator assembly, especially strain within the drive pulley (2); and/or wherein the absolute torque sensor device (12) comprises at least one force sensor (12.2) with a strain gauge load cell arranged in a sensitive area (12.1) on an arm (12.3) of the torque sensor device; and/or wherein the absolute torque sensor device (12) is integrated in the drive train by coupling an arm (12.3) equipped with at least one force sensor (12.2) to the drive pulley (2), especially via an interconnecting bracket (11).

5. Actuator assembly according to any of the preceding claims, wherein the actuator assembly (30) further comprises an absolute position sensor device (20) configured for detecting the angular position of the pivot axis; and/or wherein the absolute position sensor device (20) is coupled to the lateral area of the main pulley (1), especially by means of at least one sensor cable (22), especially being arranged in the same eccentric position with respect to the main pulley (1) as the drive pulley (2); and/or wherein the absolute position sensor device (20) comprises a traction mechanism coupled to the main pulley (1), wherein the absolute position sensor device is arranged eccentrically with respect to the main pulley.

6. Actuator assembly according to any of the preceding claims, wherein the actuator assembly is housed by two sheets, the sheets providing a housing for accommodating at least one of the following components: motor, drive train with capstan drive, drive pulley, main pulley, transmission means, absolute torque sensor device, absolute position sensor device, gear means coupled to the drive train; and/or wherein the actuator assembly comprises a logic unit configured to control the actuator assembly's actuation based on force measurement within the drive train, especially forces exerted on the drive pulley; and/or wherein at least the following actuator assembly's components are arranged next to each other in the same plane, the plane especially being defined by a sheet: motor, drive train with capstan drive and drive pulley and main pulley and transmission means, absolute torque sensor device, absolute position sensor device; and/or wherein a/the absolute position sensor device of the actuator assembly is pivot-mounted around an axis which is parallel to the axis which provides for the measurement data for the absolute torque sensor device, especially around an axis with the same eccentricity as the drive pulley.

7. Actuator assembly according to any of the preceding claims, wherein the actuator assembly (30) further comprises an absolute position sensor device (20) configured for detecting the angular position of the pivot axis (25), wherein a sensor pulley (22) of the absolute position sensor device (20) is arranged eccentrically with respect to the pivot axis and is coupled to the lateral area (1.4) of the main pulley (1) by means of at least one sensor cable (22).

8. Actuator assembly according to claim 1 or 7, wherein the capstan drive, especially the lateral area of the main pulley (1), exhibits a crank unit (1.3) for arranging and supporting and guiding the transmission means (3); and wherein the transmission means (3) are provided by a plurality of cables, especially steel wire ropes, arranged in parallel and wound around the drive pulley (1) with at least one winding, preferably two or three windings; and wherein the capstan drive is integrated in the drive train such that the capstan drive provides for the last gear speed within the drive train; wherein the absolute torque sensor device (12) is configured for detecting absolute torque based on strain measurement, especially strain generated by radial forces by or on the drive pulley and transferred via an arm (12.3) to a supporting sheet (7, 8) of the actuator assembly.

9. Actuator assembly according to any of the preceding claims, wherein the actuator assembly is configured for providing and controlling a pivoting motion in the range of greater 0° and less than 360°.

10. Method for exerting rotary actuation around a pivot axis, especially for pivoting angles in the range of greater 0° and less than 360°, especially by use of an actuator assembly (30) according to any of the preceding claims, wherein a rotary motion is provided by a motor (19) and transferred by a drive train with a capstan drive to a drive pulley (2) and further to a main pulley (1) which is pivotable around the pivot axis, wherein the actuation is controlled based on the absolute torque exerted by the main pulley around the pivot axis,
**characterized in that** transmission of the rotary motion is carried out by tensile forces applied to the lateral area of the main pulley by transmission means (3) interconnecting the pulleys, the transmission means (3) being provided by at least one cable, preferably a plurality of cables, wherein the absolute torque control is carried out based on measurement of forces, especially strain, exerted on or by the drive pulley, especially forces exerted on an arm extending from the motor to the drive pulley.

11. Method according to the preceding method claim, wherein transmission of the rotary motion is carried out by a plurality of cables, especially steel wire ropes, arranged in parallel and wound around the drive pulley (1) with at least one winding, preferably two or three windings, the cables especially being preloaded; and/or wherein the transmission means (3) are guided via a crank unit (1.3) of the main pulley and are fixed to the lateral surface of the main pulley.

12. Method according to any of the preceding method claims, the absolute torque control is carried out based on measurement of forces by means of at least one force sensor (12.2) with a strain gauge load cell arranged in a sensitive area (12.1) on an arm (12.3) extending from the motor to the drive pulley.

13. Method according to any of the preceding method claims, wherein the angular position of the main pulley is measured by means of an absolute position sensor device (20) being coupled to the lateral area of the main pulley (1), especially by means of at least one sensor cable (22) being wound around a sensor pulley (21) and also being wound around the main pulley (1), especially with opposite direction of rotation.

14. Method according to any of the preceding method claims, wherein the rotary actuation is transmitted via gear means (14) arranged within the drive train, especially via a spur gear with at least two gears, the gear means preferably increasing a transmission ratio, especially a reduction ratio, between the motor and the main pulley; and/or wherein torque or forces transmitted via the actuator assembly are absorbed by two sheets providing a housing for the actuator assembly.

15. Use of an actuator assembly of any of the claims 1 to 9 for actuating robotic kinematics for rotary actuation around a pivot axis (25) for pivoting angles in the range of greater 0° and less than 360°, wherein a capstan drive including at least one cable (3) coupling a drive pulley (2) to a main pulley (1) provides for a transmission ratio in a drive train (31) of the actuator assembly from a motor (19) to the pivot axis (25), and wherein an absolute torque measurement is carried out within the drive train by means of at least one force sensor (12.2) coupled to the drive pulley (2), especially use of the actuator assembly in hollow shaft applications, especially use of an actuator assembly (30) according to any of the preceding claims in or for an exoskeleton, especially in a method according to any of the preceding method claims.

## Patentansprüche

1. Eine Betätigungsanordnung (30), die zur Drehbetätigung um eine Schwenkachse ausgebildet ist, insbesondere für Schwenkwinkel größer als 0° und kleiner als 360°, umfassend:
einen Motor (19) mit einem Drehantrieb; einen Antriebsstrang mit einem Capstan-Antrieb, der eine Antriebsscheibe (2) und eine Hauptscheibe (1) und Übertragungsmittel (3) zum Verbinden der Scheiben untereinander umfasst, wobei die Hauptscheibe um die Schwenkachse schwenkbar ist, wobei der Antriebsstrang den Motor über die Antriebsscheibe und die Übertragungsmittel mit der Schwenkachse koppelt; eine absolute Drehmomentsensoreinrichtung (12), die zur Erfassung des Drehmoments in der Schwenkachse ausgebildet ist; wobei die Übertragungseinrichtung (3) durch mindestens ein Kabel, vorzugsweise eine Mehrzahl von Kabeln, gebildet ist, wobei jedes Kabel die Schwenkbewegung der Antriebsscheibe auf die Hauptscheibe (1) durch Zugkräfte überträgt,
die auf den Seitenbereich (1.4) der Hauptriemenscheibe übertragen,
**dadurch gekennzeichnet, dass** die Absolutdrehmoment-Sensoreinrichtung (12) mindestens einen Kraftsensor (12.2), insbesondere mindestens eine Dehnungsmessstreifen-Kraftmessdose, aufweist, wobei der Kraftsensor mit dem Capstan-Antrieb, insbesondere mit der Antriebsscheibe, gekoppelt ist, so dass die Aktoranordnung zur
Absolutdrehmomentmessung über eine Kraftmessung ausgebildet ist.

2. Antriebsanordnung nach Anspruch 1 , wobei der Spillantrieb, insbesondere der seitliche Bereich der Hauptscheibe (1), eine Kurbeleinheit (1 .3) zur Anordnung und Abstützung und Führung der Übertragungsmittel (3) aufweist; und/oder wobei die Übertragungsmittel (3) durch eine Mehrzahl von parallel angeordneten und mit mindestens einer Wicklung, vorzugsweise zwei oder drei Wicklungen, um die Antriebsscheibe (1) gewickelten Seilen, insbesondere Stahldrahtseilen, gebildet sind, wobei die Seile insbesondere vorgespannt sind; und/oder wobei der Capstan-Antrieb derart in den Antriebsstrang integriert ist, dass der Capstan-Antrieb für die letzte Gangstufe innerhalb des Antriebsstranges sorgt.

3. Antriebsanordnung nach einem der vorhergehenden Ansprüche, wobei der Antriebsstrang Getriebemittel (14), insbesondere mit einem Stirnrad, aufweist, die zumindest teilweise auf der Achse der Antriebsscheibe (2) angeordnet sind, wobei die Getriebemittel den Motor und die Antriebsscheibe koppeln; und/oder wobei der Antriebsstrang Getriebemittel mit einem Stirnradgetriebe mit mindestens drei Zahnrädern (14, 15, 18) umfasst; und/oder wobei der Antriebsstrang Getriebemittel mit einem Stirnradgetriebe mit mindestens zwei Zahnrädern (14, 15) umfasst, die auf einer symmetrischen Mittellinie (24) angeordnet sind, die durch die Achse der Hauptriemenscheibe (1) verläuft.

4. Stellantriebsanordnung nach einem der vorhergehenden Ansprüche, wobei die Absolutmomentsensoreinrichtung (12) zur Erfassung des Absolutmoments auf Basis einer Dehnungsmessung, insbesondere einer von mindestens einer der Antriebsscheiben (1, 2) des Spillantriebs ausgeübten Dehnung, insbesondere einer durch Radialkräfte auf eine Antriebsscheibe des Spillantriebs erzeugten und über einen Arm (12.3) auf ein Trägerblech (7, 8) der Antriebsbaugruppe übertragen werden, insbesondere Dehnungen innerhalb der Antriebsscheibe (2); und/oder wobei die absolute Drehmomentsensoreinrichtung (12) mindestens einen Kraftsensor (12.2) mit einer Dehnungsmessstreifen-Kraftmesszelle umfasst, die in einem sensitiven Bereich (12.1) an einem Arm (12.3) der Drehmomentsensoreinrichtung angeordnet ist; und/oder wobei die absolute Drehmomentsensoreinrichtung (12) in den Antriebsstrang integriert ist, indem ein mit dem mindestens einen Kraftsensor (12.2) ausgestatteter Arm (12.3) mit der Antriebsscheibe (2), insbesondere über einen Verbindungsbügel (11), gekoppelt ist.

5. Aktuatorbaugruppe nach einem der vorhergehenden Ansprüche, wobei die Aktuatorbaugruppe (30) ferner eine Absolutpositionssensoreinrichtung (20) aufweist, die zur Erfassung der Winkelposition der Schwenkachse ausgebildet ist; und/oder wobei die Absolutpositionssensoreinrichtung (20) mit dem Seitenbereich der Hauptscheibe (1) gekoppelt ist, insbesondere mittels mindestens eines Sensorkabels (22), wobei die Absolutpositionssensoreinrichtung (20) insbesondere in derselben exzentrischen Position bezüglich der Hauptscheibe (1) angeordnet ist wie die Antriebsscheibe (2); und/oder wobei die Absolutpositionssensoreinrichtung (20) einen mit der Hauptriemenscheibe (1) gekoppelten Zugmechanismus aufweist, wobei die Absolutpositionssensoreinrichtung exzentrisch zur Hauptriemenscheibe angeordnet ist.

6. Aktuatorbaugruppe nach einem der vorhergehenden Ansprüche, wobei die Aktuatorbaugruppe von zwei Blechen umschlossen ist, wobei die Bleche ein Gehäuse zur Aufnahme von mindestens einer der folgenden Komponenten bilden: Motor, Antriebsstrang mit Capstan-Antrieb, Antriebsriemenscheibe, Hauptriemenscheibe, Übertragungsmittel, Absolutmomentsensoreinrichtung, Absolutpositionssensoreinrichtung, mit dem Antriebsstrang gekoppelte Getriebemittel; und/oder wobei die Aktuatorbaugruppe eine Logikeinheit umfasst, die dazu ausgebildet ist, die Betätigung der Aktuatorbaugruppe auf der Grundlage einer Kraftmessung innerhalb des Antriebsstrangs, insbesondere von auf die Antriebsriemenscheibe ausgeübten Kräften, zu steuern; und/oder wobei zumindest die folgenden Komponenten der Aktuatorbaugruppe nebeneinander in derselben Ebene angeordnet sind, wobei die Ebene insbesondere durch ein Blech definiert ist: Motor, Antriebsstrang mit Capstan-Antrieb und Antriebsscheibe und Hauptscheibe und Übertragungsmittel, Absolutmomentensensoreinrichtung, Absolutpositionssensoreinrichtung; und/oder wobei die Absolutpositionssensoreinrichtung der Aktoranordnung um eine Achse schwenkbar gelagert ist, die parallel zu der Achse ist, die die Messdaten für die Absolutmomentensensoreinrichtung liefert, insbesondere um eine Achse mit der gleichen Exzentrizität wie die Antriebsscheibe.

7. Aktuatorbaugruppe nach einem der vorhergehenden Ansprüche, wobei die Aktuatorbaugruppe ferner eine Absolutpositionssensoreinrichtung (20) aufweist, die zur Erfassung der Winkelposition der Schwenkachse (25) ausgebildet ist, wobei eine Sensorscheibe (22) der Absolutpositionssensoreinrichtung (20) exzentrisch zur Schwenkachse angeordnet ist und mittels mindestens eines Sensorkabels (22) mit dem Seitenbereich (1.4) der Hauptscheibe (1) gekoppelt ist.

8. Antriebsaggregat nach Anspruch 1 oder 7, wobei der Spillantrieb, insbesondere der seitliche Bereich der Hauptscheibe (1), eine Kurbeleinheit (1.3) zur Anordnung und Abstützung und Führung der Übertragungsmittel (3) aufweist; und wobei die Übertragungsmittel (3) durch eine Mehrzahl von parallel angeordneten und mit mindestens einer Windung, vorzugsweise zwei oder drei Windungen, um die Antriebsscheibe (1) gewickelten Seilen, insbesondere Stahldrahtseilen, gebildet sind; und wobei der Capstan-Antrieb derart in den Antriebsstrang integriert ist, dass der Capstan-Antrieb für die letzte Gangstufe innerhalb des Antriebsstrangs sorgt; wobei die Absolutdrehmoment-Sensoreinrichtung (12) zur Erfassung des Absolutdrehmoments auf Basis einer Dehnungsmessung, insbesondere einer durch Radialkräfte von oder an der Antriebsscheibe erzeugten und über einen Arm (12.3) auf ein Trägerblech (7, 8) der Aktuatoranordnung übertragen wird.

9. Aktuatorbaugruppe nach einem der vorhergehenden Ansprüche, wobei die Aktuatorbaugruppe so konfiguriert ist, dass sie eine Schwenkbewegung in einem Bereich von mehr als 0° und weniger als 360° bereitstellt und steuert.

10. Verfahren zum Ausüben einer Drehbetätigung um eine Schwenkachse, insbesondere für Schwenkwinkel im Bereich größer 0° und kleiner 360°, insbesondere unter Verwendung einer Aktoranordnung (30) nach einem der vorhergehenden Ansprüche, wobei eine Drehbewegung von einem Motor (19) bereitgestellt und über einen Antriebsstrang mit einem Capstan-Antrieb auf eine Antriebsscheibe (2) und weiter auf eine um die Schwenkachse schwenkbare Hauptscheibe (1) übertragen wird, wobei die Betätigung in Abhängigkeit von dem von der Hauptscheibe um die Schwenkachse ausgeübten absoluten Drehmoment gesteuert wird, **dadurch gekennzeichnet, dass** die Übertragung der Drehbewegung durch Zugkräfte erfolgt, die auf den seitlichen Bereich der Hauptriemenscheibe durch Übertragungsmittel (3) aufgebracht werden, die die Riemenscheiben miteinander verbinden, wobei die Übertragungsmittel (3) durch mindestens ein Kabel, vorzugsweise eine Vielzahl von Kabeln, bereitgestellt werden, wobei die Steuerung des absoluten Drehmoments auf der Grundlage der Messung von Kräften, insbesondere Dehnungen, durchgeführt wird, die auf die oder durch die Antriebsriemenscheibe ausgeübt werden, insbesondere von Kräften, die auf einen Arm ausgeübt werden, der sich von dem Motor zu der Antriebsriemenscheibe erstreckt.

11. Verfahren nach dem vorhergehenden Verfahrensanspruch, wobei die Übertragung der Drehbewegung durch mehrere parallel angeordnete und mit mindestens einer Wicklung, vorzugsweise zwei oder drei Wicklungen, um die Antriebsscheibe (1) gewickelte Seile, insbesondere Stahldrahtseile, erfolgt, wobei die Seile insbesondere vorgespannt sind; und/oder wobei die Übertragungsmittel (3) über eine Kurbeleinheit (1.3) der Hauptscheibe geführt und an der Mantelfläche der Hauptscheibe befestigt sind.

12. Verfahren nach einem der vorhergehenden Verfahrensansprüche, wobei die absolute Drehmomentkontrolle auf der Messung von Kräften mittels mindestens eines Kraftsensors (12.2) mit einer Dehnungsmessstreifen-Kraftmessdose beruht, die in einem sensiblen Bereich (12.1) an einem Arm (12.3) angeordnet ist, der sich vom Motor zur Antriebsriemenscheibe erstreckt.

13. Verfahren nach einem der vorhergehenden Verfahrensansprüche, wobei die Winkelposition der Hauptscheibe mittels einer Absolutpositionssensoreinrichtung (20) gemessen wird, die mit dem seitlichen Bereich der Hauptscheibe (1) gekoppelt ist, insbesondere mittels mindestens eines Sensorkabels (22), das um eine Sensorscheibe (21) gewickelt ist und ebenfalls um die Hauptscheibe (1) gewickelt ist, insbesondere mit entgegengesetzter Drehrichtung.

14. Verfahren nach einem der vorhergehenden Verfahrensansprüche, wobei die Drehbetätigung über im Antriebsstrang angeordnete Getriebemittel (14), insbesondere über ein Stirnradgetriebe mit mindestens zwei Gängen, übertragen wird, wobei die Getriebemittel vorzugsweise ein Übersetzungsverhältnis, insbesondere ein Untersetzungsverhältnis, zwischen dem Motor und der Hauptriemenscheibe erhöhen; und/oder wobei über die Antriebseinheit übertragene Drehmomente oder Kräfte von zwei ein Gehäuse für die Antriebseinheit bildenden Blechen aufgenommen werden.

15. Verwendung einer Aktoranordnung nach einem der Ansprüche 1 bis 9 zur Betätigung von Roboterkinematiken zur Drehbetätigung um eine Schwenkachse (25) für Schwenkwinkel im Bereich von größer 0° und kleiner 360°, wobei ein Capstan-Antrieb mit mindestens einem eine Antriebsscheibe (2) mit einer Hauptscheibe (1) koppelnden Seil (3) für ein Übersetzungsverhältnis in einem Antriebsstrang (31) der Aktoranordnung von einem Motor (19) zur Schwenkachse (25) sorgt, und wobei eine absolute Drehmomentmessung innerhalb des Antriebsstranges mittels mindestens eines Kraftsensors (12.2) erfolgt, insbesondere Verwendung der Aktoranordnung in Hohlwellenanwendungen, insbesondere Verwendung einer Aktoranordnung (30) nach einem der vorhergehenden Ansprüche in oder für ein Exoskelett, insbesondere bei einem Verfahren nach einem der vorhergehenden Verfahrensansprüche.

## Revendications

1. Ensemble actionneur (30) configuré pour un actionnement rotatif autour d'un axe de pivotement, notamment pour des angles de pivotement supérieurs à 0° et inférieurs à 360°, comprenant :
un moteur (19) avec un entraînement rotatif ; un train d'entraînement avec un entraînement de cabestan comprenant une poulie d'entraînement (2) et une poulie principale (1) et des moyens de transmission (3) pour interconnecter les poulies, dans lequel la poulie principale peut pivoter autour de l'axe de pivotement, dans lequel le train d'entraînement couple le moteur à l'axe de pivotement via la poulie d'entraînement et les moyens de transmission ; un
dispositif capteur de couple absolu (12) configuré pour détecter le couple dans l'axe de pivotement ; dans lequel les moyens de transmission (3) sont fournis par au moins un câble,
de préférence une pluralité de câbles, chaque câble transmettant le mouvement de pivotement de la poulie d'entraînement à la poulie principale (1) par des forces de traction appliquées à la zone latérale (1.4) de la poulie principale,
**caractérisé en ce que** le dispositif de capteur de couple absolu (12) présente au moins un capteur de force (12.2), en particulier au moins une cellule de charge à jauge de contrainte, le capteur de force étant couplé à l'entraînement du cabestan, en particulier couplé à la poulie d'entraînement, de sorte que l'ensemble d'actionneurs est configuré pour la mesure du couple absolu par mesure de la force.

2. Ensemble d'actionnement selon la revendication 1, dans lequel l'entraînement du cabestan, en particulier la zone latérale de la poulie principale (1), présente une unité de manivelle (1.3) pour la disposition, le support et le guidage des moyens de transmission (3) ; et/ou dans lequel les moyens de transmission (3) sont constitués par une pluralité de câbles, en particulier des câbles en fil d'acier, disposés en parallèle et enroulés autour de la poulie d'entra nement (1) avec au moins un enroulement, de préférence deux ou trois enroulements, les câbles étant en particulier préchargés ; et/ou dans lequel l'entra nement de cabestan est intégré dans le train d'entra nement de telle sorte que l'entra nement de cabestan assure le dernier rapport de vitesse dans le train d'entra nement.

3. Ensemble d'actionnement selon l'une quelconque des revendications précédentes, dans lequel le train d'entraînement comprend des moyens d'engrenage (14), notamment avec un engrenage droit, qui sont au moins partiellement disposés sur l'axe de la poulie d'entraînement (2), les moyens d'engrenage couplant le moteur et la poulie d'entraînement ; et/ou dans lequel le train d'entraînement comprend des moyens d'engrenage avec un engrenage droit avec au moins trois engrenages (14, 15, 18) ; et/ou dans lequel le train d'entraînement comprend des moyens d'engrenage avec un engrenage droit avec au moins deux engrenages (14, 15) disposés sur une ligne médiane symétrique (24) passant par l'axe de la poulie principale (1).

4. Ensemble actionneur selon l'une quelconque des revendications précédentes, dans lequel le dispositif capteur de couple absolu (12) est configuré pour détecter le couple absolu sur la base d'une mesure de déformation, notamment la déformation exercée par au moins l'une des poulies (1, 2) de l'entraînement par cabestan, notamment la déformation générée par les forces radiales sur une poulie de l'entraînement par cabestan et transférée via un bras (12.3) à une feuille de support (7, 8) de l'ensemble actionneur, en particulier la déformation à l'intérieur de la poulie d'entraînement (2) ; et/ou dans lequel le dispositif capteur de couple absolu (12) comprend au moins un capteur de force (12.2) avec une cellule de charge à jauge de contrainte disposée dans une zone sensible (12.1) sur un bras (12.3) du dispositif de capteur de couple ; et/ou dans lequel le dispositif de capteur de couple absolu (12) est intégré dans le train d'entraînement en couplant un bras (12.3) équipé d'au moins un capteur de force (12.2) à la poulie d'entraînement (2), en particulier via un support d'interconnexion (11).

5. Ensemble d'actionnement selon l'une quelconque des revendications précédentes, dans lequel l'ensemble d'actionnement (30) comprend en outre un dispositif de détection de position absolue (20) configuré pour détecter la position angulaire de l'axe de pivotement ; et/ou dans lequel le dispositif de détection de position absolue (20) est couplé à la zone latérale de la poulie principale (1), notamment au moyen d'au moins un câble de détection (22), notamment en étant disposé dans la même position excentrée par rapport à la poulie principale (1) que la poulie d'entraînement (2) ; et/ou dans lequel le dispositif de détection de position absolue (20) comprend un mécanisme de traction couplé à la poulie principale (1), le dispositif de détection de position absolue étant disposé de manière excentrée par rapport à la poulie principale.

6. Ensemble actionneur selon l'une quelconque des revendications précédentes, dans lequel l'ensemble actionneur est logé par deux feuilles, les feuilles fournissant un logement pour loger au moins l'un des composants suivants : moteur, train d'entraînement avec cabestan, poulie d'entraînement, poulie principale, moyens de transmission, dispositif capteur de couple absolu, dispositif capteur de position absolue, moyens d'engrenage couplés au train d'entraînement ; et/ou dans lequel l'ensemble actionneur comprend une unité logique configurée pour commander l'actionnement de l'ensemble actionneur sur la base d'une mesure de force au sein du train d'entraînement, notamment des forces exercées sur la poulie d'entraînement ; et/ou dans lequel au moins les composants suivants de l'ensemble actionneur sont disposés les uns à côté des autres dans un même plan, le plan étant notamment défini par une tôle : moteur, train d'entraînement avec entraînement par cabestan et poulie d'entraînement et poulie principale et moyens de transmission, dispositif capteur de couple absolu, dispositif capteur de position absolue ; et/ou dans lequel un/le dispositif capteur de position absolue de l'ensemble d'actionneurs est monté pivotant autour d'un axe qui est parallèle à l'axe qui fournit les données de mesure pour le dispositif capteur de couple absolu, en particulier autour d'un axe ayant la même excentricité que la poulie d'entraînement.

7. Ensemble d'actionneurs selon l'une quelconque des revendications précédentes, dans lequel l'ensemble d'actionneurs comprend en outre un dispositif de détection de position absolue (20) configuré pour détecter la position angulaire de l'axe de pivotement (25), dans lequel une poulie de détection (22) du dispositif de détection de position absolue (20) est disposée de manière excentrée par rapport à l'axe de pivotement et est couplée à la zone latérale (1.4) de la poulie principale (1) au moyen d'au moins un câble de détection (22).

8. Ensemble d'actionnement selon la revendication 1 ou 7, dans lequel l'entraînement du cabestan, en particulier la zone latérale de la poulie principale (1), présente une unité de manivelle (1.3) pour la disposition et le support et le guidage des moyens de transmission (3) ; et dans lequel les moyens de transmission (3) sont fournis par une pluralité de câbles, en particulier des câbles d'acier, disposés en parallèle et enroulés autour de la poulie d'entraînement (1) avec au moins un enroulement, de préférence deux ou trois enroulements ; et dans lequel l'entraînement de cabestan est intégré dans le train d'entraînement de sorte que l'entraînement de cabestan fournit la dernière vitesse de transmission dans le train d'entraînement ; dans lequel le dispositif de capteur de couple absolu (12) est configuré pour détecter le couple absolu basé sur la mesure de la déformation, en particulier la déformation générée par les forces radiales par ou sur la poulie d'entraînement et transférée via un bras (12.3) à une feuille de support (7, 8) de l'ensemble actionneur.

9. Ensemble actionneur selon l'une quelconque des revendications précédentes, dans lequel l'ensemble actionneur est configuré pour assurer et contrôler un mouvement de pivotement dans la plage de plus de 0° et de moins de 360°.

10. Procédé pour exercer un actionnement rotatif autour d'un axe de pivotement, en particulier pour des angles de pivotement dans la plage de plus de 0° et de moins de 360°, en particulier en utilisant un ensemble d'actionneur (30) selon l'une quelconque des revendications précédentes, dans lequel un mouvement rotatif est fourni par un moteur (19) et transféré par un train d'entraînement avec un entraînement par cabestan à une poulie d'entraînement (2) et en outre à une poulie principale (1) qui peut pivoter autour de l'axe de pivotement, dans lequel l'actionnement est commandé sur la base du couple absolu exercé par la poulie principale autour de l'axe de pivotement, **caractérisé en ce que** la transmission du mouvement rotatif est effectuée par des forces de traction appliquées à la zone latérale de la poulie principale par des moyens de transmission (3) interconnectant les poulies, les moyens de transmission (3) étant fournis par au moins un câble, de préférence une pluralité de câbles, dans lequel la commande du couple absolu est effectuée sur la base de la mesure des forces, en particulier de la déformation, exercées sur ou par la poulie d'entraînement, en particulier des forces exercées sur un bras s'étendant du moteur à la poulie d'entraînement.

11. Procédé selon la revendication de procédé précédente, dans lequel la transmission du mouvement de rotation est effectuée par une pluralité de câbles, en particulier des câbles d'acier, disposés en parallèle et enroulés autour de la poulie d'entraînement (1) avec au moins un enroulement, de préférence deux ou trois enroulements, les câbles étant en particulier préchargés ; et/ou dans lequel les moyens de transmission (3) sont guidés via une unité de manivelle (1.3) de la poulie principale et sont fixés à la surface latérale de la poulie principale.

12. Procédé selon l'une quelconque des revendications précédentes, le contrôle du couple absolu est effectué sur la base de la mesure des forces au moyen d'au moins un capteur de force (12.2) avec une cellule de charge à jauge de contrainte disposée dans une zone sensible (12.1) sur un bras (12.3) s'étendant du moteur à la poulie d'entraînement.

13. Procédé selon l'une quelconque des revendications précédentes, dans lequel la position angulaire de la poulie principale est mesurée au moyen d'un dispositif de détection de position absolue (20) qui est couplé à la zone latérale de la poulie principale (1), en particulier au moyen d'au moins un câble de détection (22) qui est enroulé autour d'une poulie de détection (21) et qui est également enroulé autour de la poulie principale (1), en particulier avec un sens de rotation opposé.

14. Procédé selon l'une quelconque des revendications précédentes, dans lequel l'actionnement rotatif est transmis par l'intermédiaire de moyens d'engrenage (14) disposés à l'intérieur de la chaîne cinématique, notamment par l'intermédiaire d'un engrenage droit à au moins deux vitesses, les moyens d'engrenage augmentant de préférence un rapport de transmission, notamment un rapport de réduction, entre le moteur et la poulie principale ; et/ou dans lequel le couple ou les forces transmis par l'ensemble d'actionnement sont absorbés par deux tôles constituant un boîtier pour l'ensemble d'actionnement.

15. Utilisation d'un ensemble d'actionneur de l'une quelconque des revendications 1 à 9 pour actionner une cinématique robotique pour un actionnement rotatif autour d'un axe de pivotement (25) pour des angles de pivotement dans la plage de plus de 0° et moins de 360°, dans lequel un entraînement de cabestan comprenant au moins un câble (3) couplant une poulie d'entraînement (2) à une poulie principale (1) fournit un rapport de transmission dans un train d'entraînement (31) de l'ensemble d'actionneur d'un moteur (19) à l'axe de pivotement (25), et dans lequel une mesure de couple absolu est effectuée dans le train d'entraînement au moyen d'au moins un capteur de force (12.2) couplé à la poulie d'entraînement (2), notamment utilisation de l'ensemble d'actionneurs dans des applications à arbre creux, notamment utilisation d'un ensemble d'actionneurs (30) selon l'une quelconque des revendications précédentes dans ou pour un exosquelette, notamment dans un procédé selon l'une quelconque des revendications de procédé précédentes.
